(19)

Europäisches
Patentamt
European
Patent Office
Office européen
des brevets

(11) **EP 3 531 019 A1**

(12) **EUROPEAN PATENT APPLICATION**

(43) Date of publication:
**28.08.2019 Bulletin 2019/35**

(51) Int Cl.:
**F23N 5/10** *(2006.01)*          **F01D 17/08** *(2006.01)*
**F02C 9/28** *(2006.01)*          **F01D 21/00** *(2006.01)*

(21) Application number: **18158970.6**

(22) Date of filing: **27.02.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **Siemens Aktiengesellschaft
80333 München (DE)**

(72) Inventors:
• **Zhang, Yu
  Lincoln, LN6 3LA (GB)**
• **Latimer, Anthony
  Lincoln, LN6 0RH (GB)**
• **Martinez Garcia, Miguel
  Lincoln, LN1 3AL (GB)**

(74) Representative: **Maier, Daniel Oliver
Siemens AG
Postfach 22 16 34
80506 München (DE)**

(54) **ANALYSIS METHOD FOR A GAS TURBINE**

(57)     The gas turbine comprising a plurality of combustors for igniting gas. The method comprising receiving first temperature measurements for a first plurality of probing points, each associated with one of the plurality of combustors (S0). The method comprising receiving second temperature measurements for a second plurality of probing points, each located downstream of the plurality of combustors (S1). The method comprising determining an association between the first plurality of probing points and the second plurality of probing points. The determining comprising using the first and second temperature measurements and position information for the first and second plurality of probing points to determine swirl characteristics for the gas turbine. The swirl characteristics representing the angular shift between the ignited gas at the plurality of combustors and the ignited gas at the second plurality of probing points (S2).

A computer readable medium and gas turbine are also provided.

FIG 11

RECEIVE FIRST
TEMPERATURE
MEASUREMENTS                    S0

RECEIVE SECOND
TEMPERATURE
MEASUREMENTS                    S1

DETERMINE ASSOCIATION
BETWEEN FIRST AND
SECOND PROBING POINTS          S2

EP 3 531 019 A1

**Description**

The present disclosure relates to an analysis method for a gas turbine and a gas turbine. In particular the disclosure is concerned with a gas turbine comprising a plurality of combustors for igniting gas, and an analysis method for the same.

**Background**

Gas turbines are widely used for power generation and mechanical drive applications. Applications include in aviation and marine propulsion systems, electric power stations, and oil and gas transportation amongst many others.

There is a need to monitor the performance of gas turbines, such as to identify potential or actual faults. The early and accurate identification of such issues is beneficial in reducing downtime, maximising turbine and environmental efficiency, and for ensuring the safety of personnel.

It has previously been identified that mechanical issues in gas turbines may be identified by monitoring the temperature within the combustors, e.g. the temperature at the burner tip of the combustors, and temperatures downstream of the combustors.

The temperature downstream of the combustors may be monitored for the purpose of identifying mechanical failures or whether such mechanical failures are likely to occur. This is because changes in combustor outlet temperatures may dramatically reduce the creep life of components.

It is generally not possible to measure the combustor outlet temperature because the temperature at the combustor outlets is typically too high to be directly measured with conventional sensors. As a result, the combustor outlet temperature is typically measured indirectly by measuring the exhaust gas temperature or the interduct temperature. The exhaust and interduct are located downstream of the combustors in the gas turbine. The temperatures are typically measured using thermocouples located in the exhaust or interduct.

Measuring the temperature at the interduct or exhaust may only identify that a failure has occurred within the gas turbine, but is not generally able to identify the combustor that is responsible for the failure. This is due to the dynamic, complex movement of the gas from the combustor through the turbine to the downstream locations of the interduct and the exhaust. As such, even if a fault is identified, extensive downtime and investigative work may be required to identify the particular combustor responsible for the fault.

It has been previously identified that the gas travels in spiralling clusters from the combustors through the gas turbine. The spiralling clusters for each combustor do not tend to mix with adjacent clusters. As a result, the gas at locations downstream of the combustors can be considered as being shifted by a swirl angle from the starting location of the gas at the outlet of a respective one of the combustors. Therefore, the swirl characteristics have been identified as an important property for determining the relationship between downstream gas temperature measurements and the combustor responsible for the downstream gas temperature measurements.

Existing approaches have attempted to determine the swirl characteristics through the application of laser imaging on the combustors.

Existing approaches have also attempted to determine or account for the swirl characteristics through the use of computational fluid dynamics.

The existing approaches have limitations. They may be expensive, and may not be capable of use during normal operation of a gas turbine. They may be computationally expensive due to the numerical simulations involved, and may be unable to determine the swirl characteristics with high certainty.

It is an object of the present invention to provide an improved approach for determining the swirl characteristics in gas turbines, or at least provide an alternative to the existing approaches.

**Summary**

According to the present disclosure there is provided a method, computer readable medium, and gas turbine as set forth in the appended claims. Other features of the invention will be apparent from the dependent claims, and the description which follows.

According to a first aspect of the invention there is provided an analysis method for a gas turbine. The gas turbine comprising a plurality of combustors for igniting gas. The analysis method comprises receiving first temperature measurements for a first plurality of probing points. Each of the first plurality of probing points being associated with one of the plurality of combustors. The analysis method comprising receiving second temperature measurements for a second plurality of probing points. Each of the second plurality of probing points being located downstream of the plurality of combustors. The analysis method comprising determining an association between the first plurality of probing points and the second plurality of probing points. The determining comprises using the first and second temperature measurements and position information for the first and second plurality of probing points to determine swirl characteristics for the gas turbine. The swirl characteristics representing the angular shift between the ignited gas at the plurality of combustors and the ignited gas at the second plurality of probing points.

Here, each of the first plurality of probing points being associated with one of the plurality of combustors, may mean that each of the plurality of combustors has one of the first plurality of probing points. This may mean that each of the plurality of probing points is associated with a respective one of the plurality of combustors. That is, each of the plurality of probing points is associated with a different combustor.

The swirl characteristics are due to the movement of the gas through the turbine. In particular, the swirl characteristics may be due to the gas travelling in spiralling clusters around the turbine instead of a straight path. These paths tend not to mix during rotation, and thus the swirl characteristics result in an angular shift between the ignited gas at the combustors and the ignited gas at the second plurality of probing points. This means that the temperature profile is shifted angularly from the combustor outlet to the second probing points. By determining the swirl characteristics, it is thus possible to trace back the temperature data to the combustors so as to determine which combustors are responsible for which downstream gas temperatures. In this way, it is possible to determine which combustors are potentially faulty based on the downstream gas temperature measurements.

Significantly, the present invention uses the first and second temperature measurements and position information for the first and second plurality of probing points to determine the swirl characteristics for the gas turbine. The present invention does not thus require separate measurements of the gas turbine using laser imaging, or computationally expensive fluid dynamic simulations. Instead, simple temperature measurements along with the position information have advantageously been determined to be able to be used to determine the swirl characteristics. The realisation that the temperature measurements and position information may be used in this way is perhaps counterintuitive, but the implementation is beneficial in terms of its simplicity over the existing, more complicated, approaches.

The swirl characteristics may represent the angular shift between the ignited gas at outlets of the plurality of combustors and the ignited gas at the second plurality of probing points. Changes in combustor outlet temperatures are significant in, potentially, dramatically reducing the creep life of components. As it is generally not possible to measure the combustor outlet temperature, the present method provides a computationally simple method for associating the unmeasured combustor outlet temperatures with the second temperature measurements.

The method may further comprise outputting the swirl characteristics. Outputting the swirl characteristics may comprise displaying the swirl characteristics and/or may comprise using the swirl characteristics in subsequent diagnostics applications.

The first plurality of probing points may be located within the plurality of combustors. The first plurality of probing points may each be associated with, e.g. located within, a burner of the plurality of combustors. The first plurality of probing points may each be associated with, e.g. located within, a burner tip, of the burners. Other locations in the combustor or burner of the combustor for allowing for measuring the temperature in the burner or more generally in the combustor are also possible.

The plurality of combustors may be in the form of an annular array of combustors. That is, the combustors all have the same radial separation from a common point, but are circumferentially spaced apart from one another. Each probing point may be associated with, e.g. located in, one of the combustors, and will thus be at a particular angle with respect to an origin location of the annular array. That is, each probing point may be associated with a different one of the combustors. The plurality of combustors may be can-annular combustors. Can-annular combustors may have discrete combustion zones contained in separate liners with their own fuel injectors, but all of the combustion zones share a common annular casing.

The second plurality of probing points may be associated with, e.g. located in, an interduct of the gas turbine. The gas turbine may comprise an interduct located downstream of the plurality of combustors. The second plurality of probing points may be located within the interduct. The second plurality of probing points may be located around the circumference of the interduct. The second plurality of probing points may be associated with, e.g. located in, an exhaust of the gas turbine. The exhaust of the gas turbine may be located downstream of an interduct, if present. The second plurality of probing points may be located around the circumference of the exhaust of the gas turbine.

The first and/or second temperature measurements may be measured by temperature sensors. The temperature sensors may be thermocouples.

The position information for the first and second plurality of probing points may be in the form of angular information denoting, for example, the angle of each probing point with respect to an origin location.

The swirl characteristics may comprise a swirl angle.

Using the first and second temperature measurements and position information for the first and second plurality of probing points to determine swirl characteristics for the gas turbine, may comprise inputting the first and second temperature measurements and the position information into a model and receiving the swirl characteristic as an output of the model.

Using the first and second temperature measurements and the position information to determine the swirl characteristics may comprise solving an optimisation problem using the first and second temperature measurements and position information as inputs, and the swirl characteristics as an unknown parameter to be determined. Solving the optimisation problem may comprise using the model.

The model may be of the form:

$$dgt(\theta) = A + Bcgt\,(\theta - \theta_1) \qquad (1)$$

In other words, solving the optimisation problem comprises solving the equation:

$$dgt(\theta) = A + Bcgt\,(\theta - \theta_1) \qquad (1)$$

$dgt(\theta)$ may be the second temperature measurement for the second probing point at position $\theta$. Position $\theta$ may refer to an angle. That is, the second plurality of probing points may be at different positions circumferentially around the downstream gas flow path, e.g. the second plurality of probing points may be arranged circumferentially around an interduct of the gas turbine. The position $\theta$ may refer to an angular position of these second plurality of probing points relative to an origin location.

$A$ and $B$ may be an optional unknown parameters. $B$ may be an optional unknown scaling factor parameter. $A$ may have a value of 0 in some example implementations. B may have a value of 1 in some example implementations.

Solving the optimisation problem may comprise determining a solution to the equation $dgt(\theta) = A + Bcgt\,(\theta - \theta_1)$. The determining of the solution may comprise using the known values $dgt(\theta)$, $cgt\,(\theta)$, and $\theta$ to determine the unknown parameters $A$, $B$ and $\theta_1$.

The determining of the solution may comprise setting initial values for the unknown parameters $A$, $B$ and $\theta_1$. The determining of the solution may comprise applying optimisation techniques to determine optimal solutions to the parameters $A$, $B$ and $\theta_1$.

Solving the optimisation problem may comprise solving a sequential quadratic programming optimisation problem.

Solving the optimisation problem may comprise solving a global optimisation problem to identify a global optimal range for the unknown parameter(s). The global optimisation problem is optionally solved using a genetic algorithm.

Solving the optimisation problem may further comprise solving a local optimisation problem to determine a local optimum solution from the global optimal range for the unknown parameter(s). The local optimisation problem is optionally solved using a Newton algorithm, preferably a Quasi-Newton algorithm. In this example implementation, solving the optimisation problem may be considered as using a genetic algorithm (GA) - Quasi-Newton (QN) algorithm approach.

Solving the optimisation problem may be performed until a convergence criterion or other exit condition is reached. The other exit condition may, for example, be based on the time or number of iterations performed during the optimisation.

In equation (1) above, A may comprises a baseline temperature value $C_1$. The baseline temperature value $C_1$.may be a baseline temperature value for the region of the gas turbine where the second plurality of probing points are located. $C_1$.may be a baseline temperature value for the interduct or the exhaust of the gas turbine. Solving the optimisation problem may further comprise determining the baseline temperature value $C_1$.

In equation (1) above, $B$ may comprises a dilation factor $C_2$. The dilation factor may be a dilation factor of the first temperature measurements at the combustors. The dilation factor may be a dimensionless ratio parameter. Solving the optimisation problem may further comprise determining the dilation factor $C_2$.

$A$ may separately or additionally comprise a hot spot correction value. The hot spot correction value may be for taking into account the presence of hot spots and/or cold spots within the gas turbine. The hot and cold spots may be created within the gas due to the discrete positions of the combustors. Solving the optimisation problem may further comprise determining the hot spot correction value.

The hot spot correction value may be represented by the equation $C_3 \cos(N(\theta - \theta_2))$. $C_3$ may be the maximum temperature difference between a hot spot and a cold spot. $N$ may be a predetermined value and may be the number of hot spots, and may be determined based on the number of combustion chambers. $\theta_2$ may be position information representing the difference between a position of a hot spot from a selected one of the second probing points. The difference may be in the form of an angle.

In most preferred implementations, $N$ is not an unknown value and is instead a predetermined value that is set based on the number of combustion chambers. For example, for a gas turbine with six combustors, there may be expected to be six hot spots and twelve cold spots. It may generally be expected that the cold spots form pairs of adjacent cold spots, and thus the difference between the cold spots in each pair may be neglected. Because of this, the gas turbine may be considered as having six hot spots and six cold spots, and thus $N$ may be considered to have the value $N = 6$. For gas turbines with different numbers of combustors, $N$ may be set in a similar way, or may be set to a different value based on the preferences of the skilled person.

In one example implementation, solving the optimisation problem comprises solving the equation:

$$dgt(\theta) = C_1 + C_2 cgt\,(\theta - \theta_1) + C_3 \cos(N(\theta - \theta_2)) \qquad (2)$$

It will be appreciated that the particular equation (2) above is not required in all implementations of the present invention. In particular, different model parameters may be set as appropriate based on the skilled person's preferences and the desired accuracy of the optimisation problem. For example, in situations where computational speed is preferred over accuracy, fewer model parameters may be used and vice versa.

In one example implementation, the swirl characteristics may be determined by using a lookup table to determine the swirl characteristics associated with the received first and second temperature measurements and the position information for the first and second plurality of probing points. The swirl characteristics for different first and second temperature measurements and position information may have previously been determined by solving an equation as described above.

The first temperature measurements and the second temperature measurements may comprise a plurality of samples over time.

According to a second aspect of the invention, there is provided a computer readable medium having instructions recorded thereon which, when executed by a processing device, cause the processing device to perform the method as described above in relation to the first aspect of the invention.

According to a third aspect of the invention, there is provided a gas turbine. The gas turbine comprising a plurality of combustors for igniting gas. The gas turbine comprises a controller. The controller is operable to receive first temperature measurements for a first plurality of probing points, each of the first plurality of probing points being associated with one of the plurality of combustors. The controller is operable to receive second temperature measurements for a second plurality of probing points, each of the second plurality of probing points being located downstream of the plurality of combustors. The controller is operable to determine an association between the first plurality of probing points and the second plurality of probing points. The determining comprising using the first and second temperature measurements and position information for the first and second plurality of probing points to determine swirl characteristics for the gas turbine. The swirl characteristics representing the angular shift between the ignited gas at the first plurality of combustors and the ignited gas at the second plurality of probing points.

The gas turbine may be operable to perform the method as described above in relation to the first aspect of the invention.

According to a fourth aspect of the invention, there is provided a controller for a gas turbine comprising a plurality of combustors for igniting gas. The controller being operable to receive first temperature measurements for a first plurality of probing points, each of the first plurality of probing points being associated with one of the plurality of combustors. The controller being operable to receive second temperature measurements for a second plurality of probing points, each of the second plurality of probing points being located downstream of the plurality of combustors, The controller being operable to determine an association between the first plurality of probing points and the second plurality of probing points, the determining comprising using the first and second temperature measurements and position information for the first and second plurality of probing points to determine swirl characteristics for the gas turbine, the swirl characteristics representing the angular shift between the ignited gas at the plurality of combustors and the ignited gas at the second plurality of probing points.

### Brief Description of the Drawings

Examples of the present disclosure will now be described with reference to the accompanying drawings, in which:

Figure 1 shows a simplified sectional view of a gas turbine according to aspects of the present invention;

Figure 2 shows a simplified sectional view of another gas turbine according to aspects of the present invention;

Figure 3 shows a simplified sectional view of another gas turbine according to aspects of the present invention;

Figure 4 is a cross-section view of a pilot burner contained in the gas turbines of Figures 1 to 3;

Figure 5 is a plot of gas turbine temperature measurements according to aspects of the present invention;

Figure 6 is a polar plot of gas turbine temperature measurements according to aspects of the present invention;

Figure 7 is a polar plot of gas turbine temperature measurements according to aspects of the present invention;

Figure 8 shows an example arrangement of thermocouples in an interduct of a gas turbine;

Figure 9A shows a polar plot of a time series of gas turbine temperature measurements according to aspects of the present invention;

Figure 9B shows a polar plot of a time series of gas turbine measurements according to aspects of the present invention;

Figures 10A-10F show histograms of optimisation results according to aspects of the present invention; and

Figure11 is a flow diagram of a method according to the first aspect of the invention.

**Detailed Description**

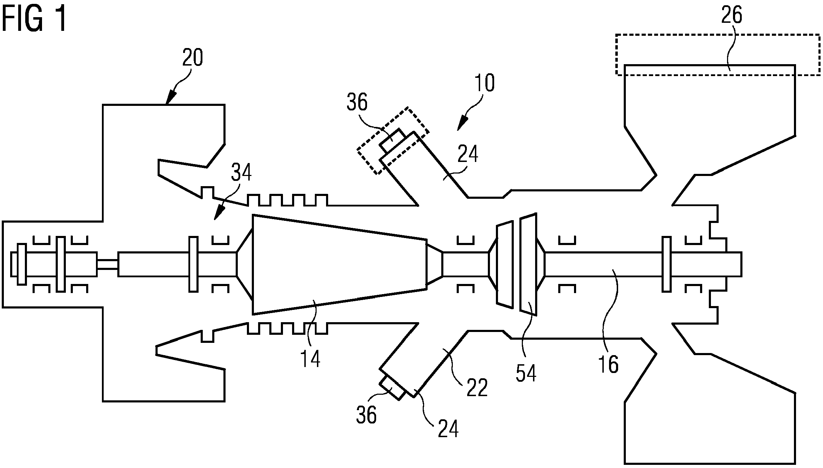

With reference to Figures 1 to 4, example gas turbine engines 10 otherwise known simply as gas turbines are described. The present invention is not limited to any particular type of gas turbine engine 10, and instead Figures 1 to 4 are intended to provide context and help aid in understanding of the present invention.

Figure 1 is an example of a gas turbine 10. The gas turbine 10 comprises a compressor 14, combustion section 22, interduct 54, power turbine 16 and exhaust duct 26. A gas duct 34 guides a propulsion gas through the gas turbine 10 starting from an inflow section 20, via the compressor 14, the combustion section 22, the power turbine 16 and the exhaust duct 26.

In more detail, at the left end of the gas turbine 10 according to Figure 1, the propulsion gas 18 in the form of air flows via an inflow section 20 into the compressor 14. The compressor 14 thereupon compresses the propulsion gas. The propulsion gas then enters the combustion section 22 of the gas turbine 10, in which it is mixed with fuel and ignited in combustors 24. The combustion section 22 contains an annular array of combustors 24, of which two are shown in FIG. 1 and which lead into the gas duct 34. The combustors 24 each comprise a burner 36 for introducing fuel into the inside of the corresponding combustor 24 and igniting the fuel/air mixture.

The gas turbine 10 of Figure 1 has a first plurality of probing points. Each of the first plurality of probing points is associated with one of the plurality of combustors 24. In the example implementation of Figure 1, the first plurality of probing points are within the plurality of combustors 24, and are, in particular, within the burners 36 of the combustors 24. That is, each of the firs plurality of probing points are in a respective one of the plurality of combustors 24, such that the temperature of each of the combustors 24 is measured by a separate probing point. In this example, temperature sensors are provided for measuring the temperature at the first plurality of probing points. The temperature sensors may be thermocouples.

The gas turbine 10 of Figure 1 has a second plurality of probing points. Each of the second plurality of probing points is located downstream of the plurality of combustors 24. The second plurality of probing points may be associated with the interduct 54 or the exhaust duct 26. In this example, temperature sensors are provided for measuring the temperature at the second plurality of probing points. The temperature sensors may be thermocouples.

The gas turbine 10 of Figure 1 further comprises a controller (not shown). The controller is arranged to receive first temperature measurements for the first plurality of probing points and second temperature measurements for the second plurality of probing points.

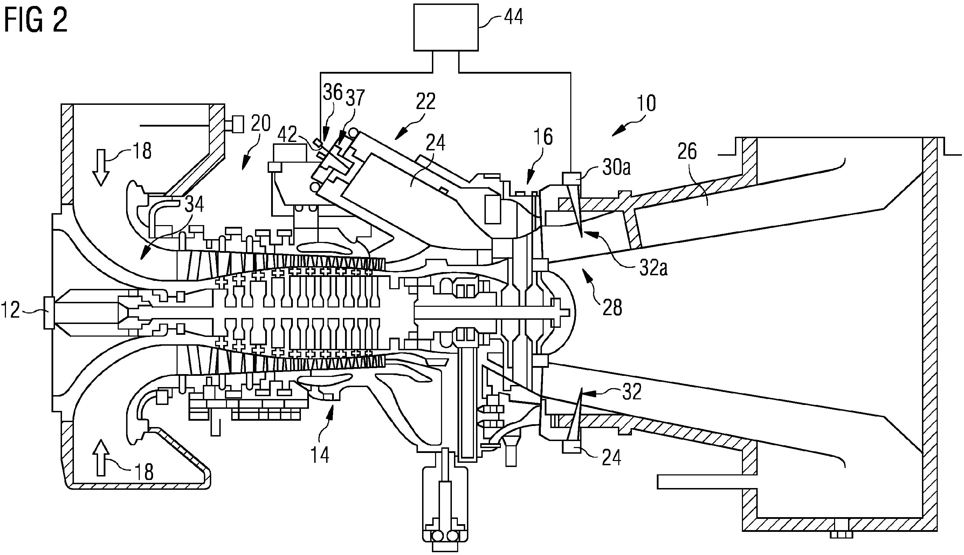

Figure 2 is another example of a gas turbine engine 10 in the form of a single-shaft gas turbine engine. The gas turbine engine 10 comprises a single rotor shaft 12 carrying both a compressor 14 and a power turbine 16. A gas duct 34 guides a propulsion gas 18 through the gas turbine 10 starting from an inflow section 20 via the compressor 14, a combustion section 22, the power turbine 16 and an exhaust duct 26.

At the left end of the engine 10 according to Figure 2 the propulsion gas 18 in the form of air flows via an inflow section 20 into the compressor 14. The compressor 14 thereupon compresses the propulsion gas 18. The propulsion gas 18 then enters the combustion section 22 of the engine 10, in which it is mixed with fuel and ignited in combustors 24. The combustion section 22 contains an annular array of combustors 24, of which only one is shown in Figure 2 and which lead into the gas duct 34.

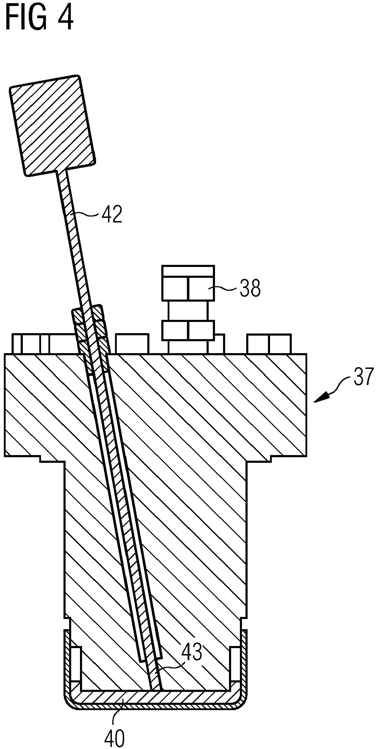

The combustors 24 each comprise a burner 36 for introducing fuel into the inside of the corresponding combustor 24 and igniting the fuel/air mixture. A burner 36 comprises a pilot burner 37. Such a pilot burner 37 is shown in detail in Figure 4. The pilot burner 37 contains a fuel inlet 38 for introducing the fuel into the pilot burner 37. The fuel is subsequently guided to a burner tip of the pilot burner 37. Furthermore, each pilot burner 37 contains a first temperature sensor 42 in the form of a so-called burner tip thermocouple arranged for measuring the temperature at the burner tip 40 (Figure 4). It should be noted, that the thermocouple does not necessarily needed to be located in the pilot burner. Other locations in the burner 36 allowing for measuring the temperature in the burner or more generally in the combustor are also possible.

The combusted propulsion gas 18 flows through the power turbine 16 expanding thereby and driving the rotor shaft 12. The expanded propulsion gas 18 then enters an exhaust duct 26. At an exit 28 of the power turbine 16 into the exhaust duct 26 several second temperature sensors 30a in the form of so called power turbine exit thermocouples are positioned at different probing points 32a. By placing the second temperature sensors 30a at the power turbine exit 28 the probing points 32a are located downstream from the combustors 24.

The gas turbine 10 of Figure 2 has a plurality of first temperature sensors 42, which in the example of Figure 2 are thermocouples, for measuring the temperature at a first plurality of probing points 40, which in the example of Figure 2 are at the burner tip positions. The gas turbine 10 of Figure 1 has a plurality of second temperature sensors 30a, which in the example of Figure 1 are thermocouples, for measuring the temperature at a second plurality of probing points 32a which are located downstream of the combustors 24.

The temperatures measured by the first temperature sensors 42 and the second temperature sensors 30a are received by a controller 44.

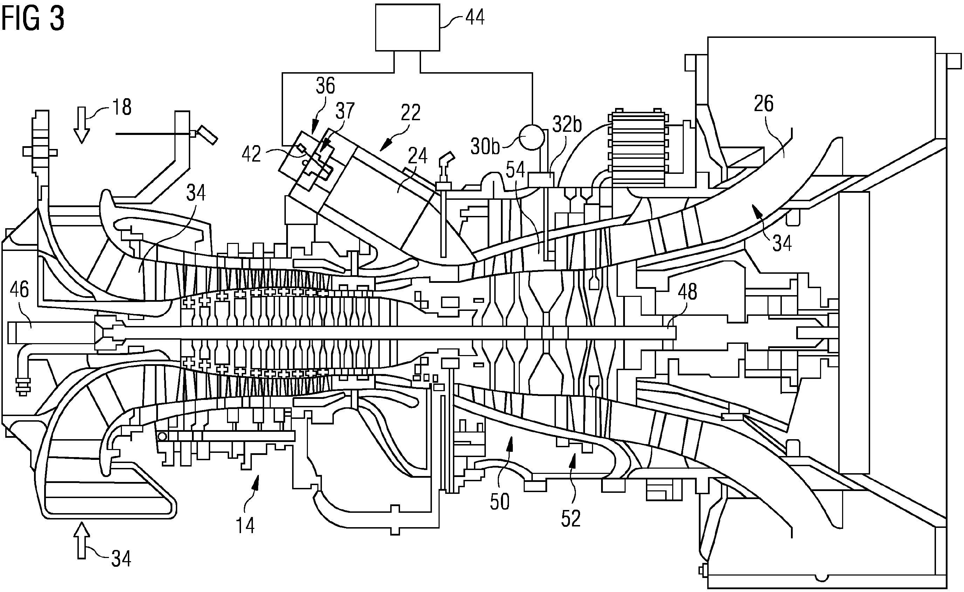

Figure 3 shows yet another example of a gas turbine engine 10 according to the invention, in the form of a so called twin-shaft engine. The gas turbine engine 10 according to Figure 3 differs from the gas turbine 10 according to Figure 2 in that two mechanically independent rotor shafts 46 and 48 are contained therein instead of the single rotor shaft 12 according to Figure 2. The power turbine 16 according to Figure 3 is split into a high-pressure turbine 50 and a low-pressure turbine 52.

The high-pressure turbine 50 is attached to the first rotor shaft 46 as is the compressor 14. The low-pressure turbine 52 is mounted on the second rotor shaft 48. The gas duct 34 contains an interduct 54 for guiding the propulsion gas 18 from the high-pressure turbine 50 to the low-pressure turbine 52. Instead of an arrangement of the second temperature sensors 30a at the power turbine exit 28 according to Figure 2, second temperature sensors 30b are arranged at different probing points 32b in the interduct 54 of the gas turbine 10 according to FIG. 3. The first temperature sensors 42 are arranged as in the embodiment according to Figure 2 in the respective burner faces 40 of the pilot burners 37. Also, the gas turbine engine 10 according to Figure 3 contains a controller 44.

While the above example gas turbines 10 are described as measuring temperature using thermocouples, it will be appreciated that other approaches of measuring temperature are within the scope of the present invention. For example, the temperature sensors could be resistance based temperature sensors. Further, the temperature sensors could measure the temperature indirectly. For example, the temperature may be inferred from another measurement of a property of the gas turbine 10.

The controllers 44 for the gas turbines 10 described above may be remote from their respective gas turbines 10 and may be operated to receive data from and/or transmit data to the gas turbine 10 other a wired or wireless network. In some implementations, the controllers 44 may also be an integral part of the gas turbine 10.

In the above example gas turbines 10, the controller 44 receives first temperature measurements for the first plurality of probing points 40 and second temperature measurements for the second plurality of probing points 32a, 32b. The controller 44 further operates to determine an association between the first plurality of probing points 40 and the second plurality of probing points 32a, 32b. This determining comprises using the first and second temperature measurements and the position information for the first and second plurality of probing points 40, 32a, 32b to determine swirl characteristics for the gas turbine 10.

In more detail, the swirl characteristics may be considered as representing the angular shift between the ignited gas at the combustor outlets for the plurality of combustors and the ignited gas at the second plurality of probing points 32a, 32b. The swirl characteristics are due to the ignited gas travelling through the turbine 10 in a complex, spiralling trajectory, rather than a straight trajectory. Ignited gas from each combustor 24 will follow an individual spiralling trajectory, a spiralling cluster, that will generally not mix with the trajectories of gas flowing from the other combustors 24. The effect of this is that, at the second plurality of probing points, 32a, 32b, the ignited gas can be considered to have gone through an angular shift relative to the combustor outlet.

Significantly, the controller 44 uses the first and second temperature measurements and position information for the first and second plurality of probing points 40, 32a, 32b to determine the swirl characteristics for the gas turbine 10. Simple temperature measurements along with the position information are thus advantageously used to determine the swirl characteristics. The realisation that the temperature measurements and position information may be used in this way is perhaps counterintuitive, but the implementation is beneficial in terms of its simplicity over the existing more complicated approaches.

In one example implementation, a model is defined to represent the relationship between the second temperature measurements and the first temperature measurements. The model represents the effect of the swirl characteristics on the gas profile. Solving the model involves determining the relationship between the first and second temperature measurements, and thus results in the determination of the swirl characteristics. The swirl characteristics may then be output, and may be applied to subsequently generated temperature measurement data to determine the relationship between the first and second temperature measurements. In this way, it is possible to determine which combustor 24 is responsible for which second temperature measurement.

In this example, determining the swirl characteristics comprises solving an optimisation problem defined by the model. The first and second temperature measurements and position information are used as inputs for the model, and the swirl characteristics as an unknown parameter to be determined.

The model may be represented by the equation:

$$dgt(\theta) = A + Bcgt(\theta - \theta_1) \qquad\qquad (1)$$

Thus, the controller operates to solve the optimisation problem represented by equation (1).

In this example, $dgt(\theta)$ is the second temperature measurement for the second probing point at position $\theta$. The second temperature measurement may be in degrees centigrade ($°C$), but other units of measuring temperature are within the scope of the present invention. The position may be an angular position given in degrees ($°$), but other units of measuring angle are within the scope of the present invention.

In this example, $cgt(\theta - \theta_1)$ is the first temperature measurement for the first probing point at position ($\theta - \theta_1$). The first temperature measurement may be in degrees centigrade ($°C$), but other units of measuring temperature are within the scope of the present invention.

In this example, $\theta_1$ is the unknown swirl characteristic, that are determined by solving the optimisation problem. The swirl characteristic may be a swirl angle given in degrees ($°$), but other units of measuring angle are within the scope of the present invention.

In this example, $A$ and $B$ are unknown parameters. $A$ may be given in degrees centigrade ($°C$), but other units of measuring temperature are within the scope of the present invention. $B$ may be a dimensionless parameter.

In operation, the controller 44 uses the known values of $dgt(\theta)$, $cgt(\theta)$, and $\theta$ to find the unknown values A, B, and $\theta_1$. In this way, by solving the equation (1) above, the controller is able to determine the swirl characteristics $\theta_1$.

The controller 44 may use optimisation techniques to determine the unknown values. In particular, the controller 44 may solve an optimisation problem using known optimisation techniques. For example, sequential quadratic programming (SQP) techniques may be used.

In preferred implementations, SQP techniques are not used. This is because, SQP is a constrained optimisation, and is thus has found to be only efficient for local searches. As such, for SQP techniques to be effective, the algorithm requires accurate constrained ranges, and a near-optimal starting potion in order to arrive at an optimal solution.

Instead, preferred implementations of the present invention solve the optimisation problem by solving a global optimisation problem to identify a global optimal range for the unknown parameter(s). The global optimisation problem is optionally solved using a genetic algorithm (GA). It has been found that global optimisation techniques, and particular Gas, are well suited for problems where there is limited prior knowledge of the characteristics of the objective function. For example, where there is limited knowledge of the parameter range, continuity, differentiability, and linearity or non-linearity of the problem. This helps to reduce the possibility of the algorithm being trapped into an unsatisfactory local extrema.

The use of global optimisation techniques such as GAs can successfully identify a range for the global optima. They may, however, not be able to identify the exact solution in the identified local range, unless a large number of generations and/or large population size are considered. Consequently and beneficially, the controller 44 may apply a global-local optimisation scheme. In particular, solving the optimisation problem may further comprise the controller 44 solving a local optimisation problem to determine a local optimum solution from the global optimal range for the unknown parameter(s). This means that after searching optimized parameters in a broader range by using the global optimisation method, the obtained parameter ranges can be fed into a local unconstrained minimization method as a starting point, to accurately locate the optimal estimates for the model parameters. The local optimisation problem is optionally solved using a Newton algorithm, preferably a Quasi-Newton algorithm. For local unconstrained minimization, the Quasi-Newton is a preferred example. Quasi-Newton methods use curvature information at each iteration to formulate a quadratic model problem. This helps avoid a large amount of calculation, comparing to the conventional Newton-type methods.

The present invention is not limited to any particular form of parameters $A$ and $B$. Moreover, the parameters $A$ and $B$ may in turn comprise multiple unknown parameters. It will be appreciated that the skilled person given the teaching of the present invention will be able to select appropriate parameters $A$ and $B$ given, for example, factors such as the type of gas turbine.

In one example implementation, the unknown parameter A may comprises a baseline temperature value $C_1$. The baseline temperature value $C_1$ may be a baseline temperature value for the region of the gas turbine 10 where the second plurality of probing points 32a, 32b are located. That is, the baseline temperature value may be a baseline temperature value for the interduct 54 or exhaust 26 of the gas turbine 10. Solving the optimisation problem may thus further comprise determining the baseline temperature value $C_1$. In this way, the equation solved by the optimisation problem may be expressed as: $dgt(\theta) = C_1 + Bcgt(\theta - \theta_1)$.

In one example implementation, *A* may separately or additionally comprise a hot spot correction value. The hot spot correction value may be for taking into account the presence of hot spots and/or cold spots within the gas turbine. Solving the optimisation problem further comprises determining the hot spot correction value.

The hot spot correction value may be represented by the equation $C_3 \cos(N(\theta - \theta_2))$. $C_3$ may be the maximum temperature difference between a hot spot and a cold spot. This may be considered as the hot-cold sport amplitude. N may be the number of hot spots, and may be determined based on the number of combustion chambers. $\theta_2$ may be position information representing the difference between a position of a hot spot from a selected one of the second probing points. For example, $\theta_2$ may be the angular separation between the hot spot and a selected one of the second probing points. $\theta_2$ may be considered as the hot spot rotational angle. That is, the difference may be in the form of an angle. In this way, the equation solved by the optimisation problem may be expressed as:

$$dgt(\theta) = C_1 + Bcgt\,(\theta - \theta_1) + C_3 \cos(N(\theta - \theta_2)).$$

In one example implementation *B* may be an optional unknown scaling factor parameter. *B* may comprises a dilation factor $C_2$. The dilation factor may be a dilation factor of the first temperature measurements at the combustors. The dilation factor may be a dimensionless ratio parameter. Solving the optimisation problem may thus further comprise determining the dilation factor $C_2$. In this way, the equation solved by the optimisation problem may be expressed as: $dgt(\theta) = A + C_2cgt\,(\theta - \theta_1)$.

In one example implementation, the equation solved by the optimisation problem may thus be expressed as:

$$dgt(\theta) = C_1 + C_2cgt\,(\theta - \theta_1) + C_3 \cos(N(\theta - \theta_2)) \qquad (2)$$

It will be appreciated that solving the equation does not necessarily mean finding a perfect mathematical solution. Instead, solving may simply mean finding an apparent optimal solution based on conditions such as computational resources and the desired execution time. The solution may be considered as the result once a convergence or exit criterion is reached during the running of the algorithm.

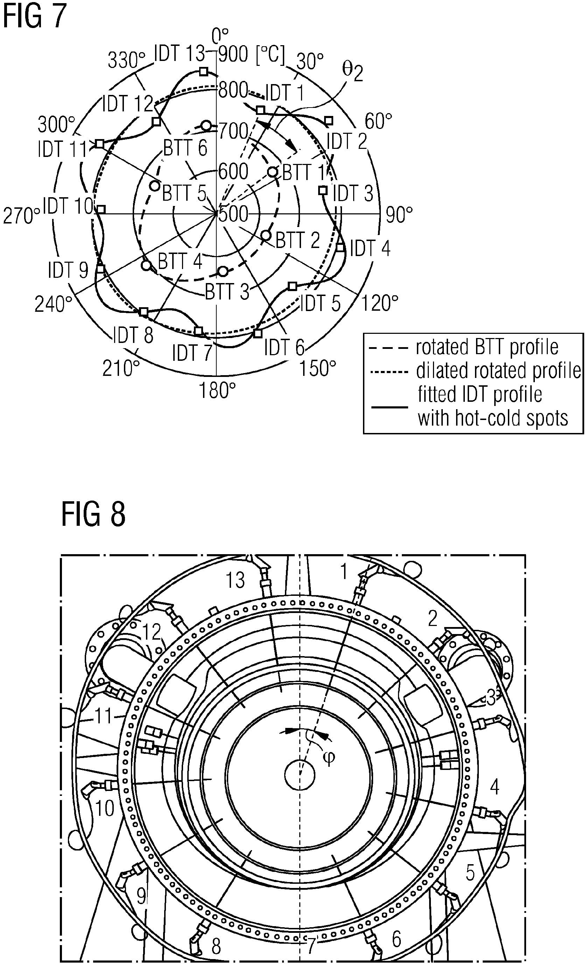

An example implementation of the present invention will now be described in relation to the gas turbine 10 of Figure 1. This gas turbine comprises six can-annular combustors 22. Six burner tip thermocouples are provided for measuring the temperature at the burner tips of the six combustors 22. That is, one thermocouple for each burner tip. Thirteen interduct thermocouples are provided spaced circumferentially around the interduct 54. The burner tip thermocouples are located on each of the six combustors and the thirteen thermocouples are spread equally around the circumference of interduct located between the gas generator and power turbine. An example arrangement of the thirteen interduct thermocouples is shown in Figure 8, where the thirteen interduct thermocouples are labelled 1 through 13. It can be seen that the first interduct thermocouple is spaced an angle $\varphi$ from what may be considered as the 12 o'clock position.

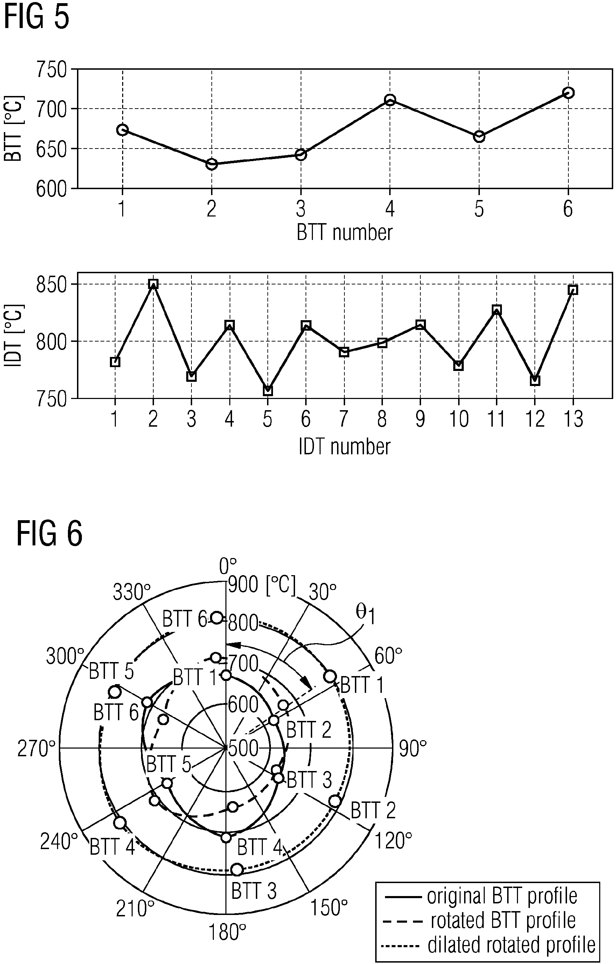

Figure 5 shows temperature readings for the six burner tip thermocouples (BTT) and the thirteen interduct thermocouples (IDT) at one time step. It is desired to determine the association between the thirteen IDT measurements and the six BTT measurements. The BTT plot can be considered as representing a function of the BTT profile with regards to the position, i.e. *cgt* $(\theta)$. The IDT plot can be considered as representing a function of the IDT profile with regards to the position, i.e. $dgt(\theta)$.

In one example implementation, the relationship between the BTT profile and the IDT profile may be expressed by the equation (2) as defined above. The controller is operable to solve the equation defined above to determine values for the five unknown parameters.

Solutions to equation (2) using example optimisation techniques will be known be described. In these examples, the ranges of the parameters are initialised to have broad values. That is, the following values for the parameters are initialised $C_1 : [0,1000]$; $C_2 : [0,2]$; $C_3 : [0, 200]$; $\theta_1 : [0,360]$; $\theta_2 : [0,60]$. This means that temperature value $C_1$ has a maximum value of 100 degrees centigrade, the dilation factor $C_2$ has a maximum ratio value of 2, the hot-cold spot temperature difference $C_3$ has a maximum value of 200 degrees centigrade, the swirl angle has a maximum value of 360 degrees, and the difference between a position of a hot spot from a selected one of the second probing points $\theta_2$ has a maximum value of 60 degrees.

The results from different optimisation algorithms within the scope of the present invention are shown in the below Table 1.

**[Table 1]**

| Method | Fitted parameters | | | | | RMSE (°C) |
|---|---|---|---|---|---|---|
| | $C_1$ (°C) | $C_2$ (/) | $C_3$ (°C) | $\theta_1$ (°) | $\theta_2$ (°) | |
| GA[a] | 528.92 | 0.403 | 38.60 | 55.38 | 29.43 | 7.52 |
| GA[b] | 574.89 | 0.335 | 38.34 | 55.38 | 29.41 | 7.28 |
| SQP[c] | 732.50 | 0.098 | 0 | 0 | 59.53 | 28.87 |
| SQP[d] | 801.59 | 0 | 36.43 | 151.72 | 29.35 | 11.65 |
| SQP[e] | 577.22 | 0.332 | 38.22 | 56.58 | 29.42 | 7.29 |
| GA-QN | 572.49 | 0.338 | 38.26 | 55.38 | 29.42 | 7.27 |

Here, GA[a] is a genetic algorithm (GA) executed once; GA[b] is a genetic algorithm executed 20 times, with the result having the lowest root-mean-square-error (RMSE) selected; SQP[c] is a SQP algorithm executed with the starting points [0, 0, 0, 0, 0]; SQP[d] is a SQP algorithm executed with the starting points [500, 1, 100, 180, 30]; SQP[e] is a SQP algorithm executed with the starting points [600, 0.3, 40, 50, 30]; and GA-QN is the preferred GA - Quasi-Newton approach.

The results of Table 1 show that one performance of a GA can identify a global solution of the parameters. By executing GA more times, the solutions can be more accurate, however, it is more expensive computationally. On the other hand, SQP will give more accurate solutions, if the starting points of the parameters are closer to the optimal solutions. However, when little is known about the exact parameter ranges and starting points, this may be difficult to achieve in practice. Table 1 thus shows that while all of the algorithm approaches within the scope of the present invention are capable of solving the optimisation problem, the global-local optimisation scheme as embodied by the GA-QN method is preferred for its robustness and effectiveness. GA-QN can perform better than GA alone, in terms of accuracy and time cost, and it can overcome the difficulties occurred in the SQP or other similar optimisation methods, which demand more exact parameter ranges and starting points in order to get accurate solutions.

Figure 6 shows the BTT plot of Figure 5 in a polar system for convenience. Figure 6 further shows the effect of the five parameters determined above using the GA-QN method when applied to the BTT measurements.

The original BTT profile in Figure 6 is shown as the dashed line. Each of the burner tip temperature (BTT) measurements is labelled BTT1-BTT6. Here, BTT1 is the burner tip temperature of a first of the six combustors, BTT2 is the burner tip temperature of a second of the six combustors and so on. BTT1 is considered to be a position $\theta = 0°$. That is, the 12 o'clock position mentioned above in relation to Figure 8. BTT2 - BTT6 are spaced angularly apart from BTT1. It will be appreciated that the values in the profile between the individual BTT measurements, e.g. the temperatures between BTT1 and BTT2 do not need to be known. If necessary, they may be estimated using a curve fitting or interpolation method. Generally, a simple linear interpolation may be used to estimate the temperatures in between the measured temperatures. More sophisticated curve fitting approaches may also be used based on the preferences of the skilled person.

Figure 6 further shows a dot-dashed line that reflects the original BTT profile rotated by the determined swirl angle $\theta_1$. In this way, the dot-dashed line shows the rotated profile $cgt\,(\theta - \theta_1)$.

Figure 6 further shows a dotted line that represents the result of the determined temperature value $C_1$ and determined dilation factor $C_2$ on the rotated BTT profile. In this way, the dotted line shows the dilated, rotated profile $C_1 + C_2 cgt\,(\theta - \theta_1)$.

Figure 7 shows the IDT plot of Figure 5 in a polar system for convenience. Figure 7 shows the original IDT temperature measurements labelled IDT 1 - IDT 13. The IDT temperature measurements IDT1 - IDT 13 are shifted by the angle $\varphi$ with respect to the origin because the position of the probing point IDT1 in this example is not at the same 12 o'clock position of BTT1. This is shown in Figure 8 and explained above.

Figure 7 shows the rotated BTT profile $cgt\,(\theta - \theta_1)$ in the form of a dot dashed line. It can be seen that the positions of the BTTs in the rotated BTT profile correspond to the six hot spots in the fitted IDT profile. That is, BTT1 corresponds to the hot spot proximate to IDT2; BTT2 corresponds to hot spot proximate to IDT 4; BTT3 corresponds to the hot spot proximate to IDT6; BTT4 corresponds to the hot spot proximate to IDT 9; BTT5 corresponds to the hot spot proximate to IDT11; and BTT6 corresponds to the hot spot proximate to IDT13. The results show that the swirl angle approximately equals $\theta_2 + \varphi$. Therefore, the swirl angle is independent to the IDT positions, i.e. the angle $\varphi$, whilst the rotational angle from the IDT1 to the nearest hot spot, $\theta_2$ will be adjusted according to $\varphi$.

Figure 7 further shows the dilated version of the rotated BTT profile $C_1 + C_2 cgt\,(\theta - \theta_1)$ as a dotted line.

Figure 7 further shows a fitted IDT plot in the form of a continuous line generally between these original IDT temperature measurements. The fitted IDT line is generated using the equation $C_1 + C_2 cgt\,(\theta - \theta_1) + C_3 \cos(N(\theta - \theta_2))$ of which all the parameters are now known as a result of solving the optimisation problem.

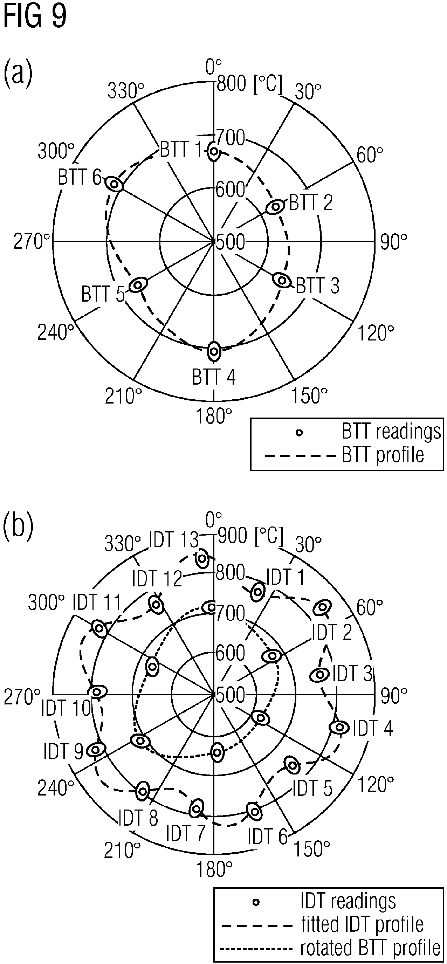

Figures 9A and 9B show data as a result one days operation of the gas turbine 10 and represents 1440 time steps. Figure 9A shows the original BTT readings as circles along with a connected BTT profile. Figure 9B shows a dot-dashed line representing the original BTT readings rotated by the swirl angle $\theta_1$, along with the original IDT readings, and fitted IDT readings generated using he equation $C_1 + C_2 cgt (\theta - \theta_1) + C_3 \cos(N(\theta - \theta_2))$ of which all the parameters are now known. Figure 9B shows the reliability of the fitting approach, and in each case, the six burner tip thermocouples are clearly associated to the six hot spots on the fitted interduct thermocouple profiles.

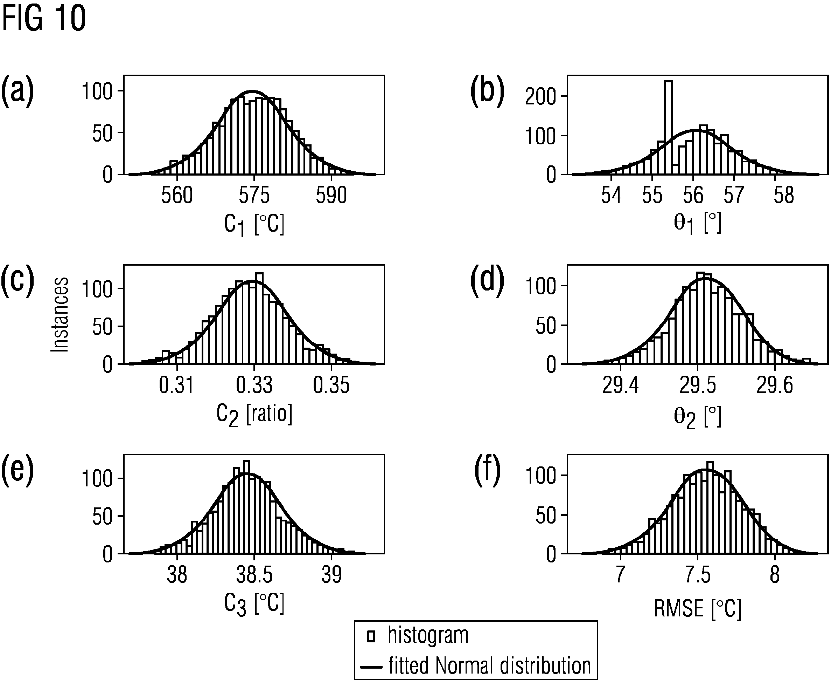

Figures 10A-10D show histograms of the optimised five parameters. The average fitted error is < 1%, shown by the root mean square error (RMSE) in Figure 10(f). From Figures 10(a)-10(e), it can be seen that all the other parameters follow a general normal distribution, except the swirl angle $\theta_1$ (Figure 10(b)). This demonstrates that the swirl angle is relatively constant for a gas turbine at the operating load condition, which can be a relevant health indicator for the combustion system monitoring. A change in $\theta_1$ may thus indicate a significant health issue in the gas turbine. The parameters $C_1$, $C_2$, $C_3$, $\theta_2$ may also provide useful diagnostic information for the gas turbine.

The features of the present invention may also be applied in conjunction with other combustion monitoring approaches, which use only the downstream gas temperature profiles, to link the features of the downstream gas temperature profiles to source the problematic combustion chambers, which will make the diagnostics of the gas turbine combustion systems more efficiently and with higher certainty.

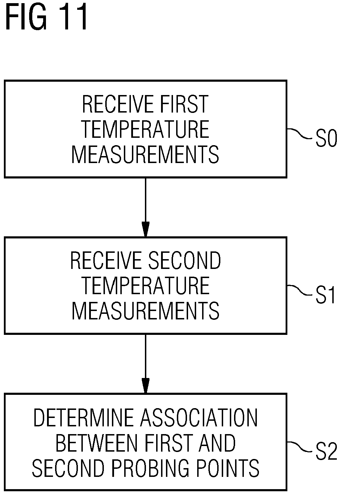

Figure 11 shows an example method according to the first aspect of the present invention.

Step S0 comprises receiving first temperature measurements for a first plurality of probing points, each of the first plurality of probing points being associated with one of the plurality of combustors.

Step S1 comprises receiving second temperature measurements for a second plurality of probing points, each of the second plurality of probing points being located downstream of the plurality of combustors.

Step S2 comprises determining an association between the first plurality of probing points and the second plurality of probing points. The determining comprising using the first and second temperature measurements and position information for the first and second plurality of probing points to determine swirl characteristics for the gas turbine. The swirl characteristics representing the angular shift between the ignited gas at the plurality of combustors and the ignited gas at the second plurality of probing points.

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An analysis method for a gas turbine, the gas turbine comprising a plurality of combustors for igniting gas, the analysis method comprising:

   receiving first temperature measurements for a first plurality of probing points, each of the first plurality of probing points being associated with one of the plurality of combustors;

   receiving second temperature measurements for a second plurality of probing points, each of the second plurality of probing points being located downstream of the plurality of combustors; and

   determining an association between the first plurality of probing points and the second plurality of probing points, the determining comprising using the first and second temperature measurements and position information for the first and second plurality of probing points to determine swirl characteristics for the gas turbine, the swirl characteristics representing the angular shift between the ignited gas at the plurality of combustors and the ignited gas at the second plurality of probing points.

2. A method as claimed in claim 1, further comprising outputting the swirl characteristics.

3. A method as claimed in claim 1 or 2, wherein using the first and second temperature measurements and the position information to determine the swirl characteristics comprise solving an optimisation problem using the first and second temperature measurements and position information as inputs, and the swirl characteristics as an unknown parameter to be determined.

4. A method as claimed in claim 3, wherein solving the optimisation problem comprises solving the equation $dgt(\theta) = A + Bcgt(\theta - \theta_1)$,

   where $dgt(\theta)$ is the second temperature measurement for the second probing point at position $\theta$,
   where $cgt(\theta - \theta_1)$ is the first temperature measurement for the first probing point at position $(\theta - \theta_1)$,
   where $\theta_1$ is the swirl characteristics,
   where $A$ and $B$ are optional unknown parameters.

5. A method as claimed in claim 4, wherein A comprises a baseline temperature value $C_1$, and wherein solving the optimisation problem further comprises determining the baseline temperature value $C_1$.

6. A method as claimed in claim 4 or 5, wherein B comprises a dilation factor $C_2$, and wherein solving the optimisation problem further comprises determining the dilation factor $C_2$.

7. A method as claimed in any of claims 4 to 6, wherein A comprises a hot spot correction value, the hot spot correction value being for taking into account the presence of hot spots and cold spots within the gas turbine, and wherein solving the optimisation problem further comprises determining the hot spot correction value.

8. A method as claimed in claim 7, wherein the hot spot correction value is represented by the equation $C_3 \cos(N(\theta - \theta_2))$, where $C_3$ is the maximum temperature difference between a hot spot and a cold spot, $N$ is a predetermined value, and $\theta_2$ is position information representing the difference between a position of a hot spot from a selected one of the second probing points.

9. A method as claimed in any of claims 3 to 8, wherein solving the optimisation problem comprises solving a global optimisation problem to identify a global optimal range for the unknown parameter(s), the global optimisation problem is optionally solved using a genetic algorithm.

10. A method as claimed in claim 9, wherein solving the optimisation problem further comprises solving a local optimisation problem to determine a local optimum solution from the global optimal range for the unknown parameter(s), the local optimisation problem is optionally solved using a quasi-Newton algorithm.

11. A method as claimed in any preceding claim, wherein the gas turbine comprises an interduct located downstream of the plurality of combustors, and wherein the second plurality of probing points are located within the interduct.

12. A method as claimed in claim 11, wherein the second plurality of probing points are located around the circumference of the interduct.

**13.** A method as claimed in any preceding claim, wherein the gas turbine comprises an exhaust located downstream of the plurality of combustors, and wherein the second plurality of probing points are located within the exhaust.

**14.** A computer readable medium having instructions recorded thereon which, when executed by a processing device, cause the processing device to perform the method as claimed in any preceding claim.

**15.** A gas turbine comprising:

a plurality of combustors for igniting gas;
a controller operable to

receive first temperature measurements for a first plurality of probing points, each of the first plurality of probing points being associated with one of the plurality of combustors;
receive second temperature measurements for a second plurality of probing points, each of the second plurality of probing points being located downstream of the plurality of combustors; and
determine an association between the first plurality of probing points and the second plurality of probing points, the determining comprising using the first and second temperature measurements and position information for the first and second plurality of probing points to determine swirl characteristics for the gas turbine, the swirl characteristics representing the angular shift between the ignited gas at the plurality of combustors and the ignited gas at the second plurality of probing points.

FIG 1

EP 3 531 019 A1

FIG 2

EP 3 531 019 A1

FIG 3

FIG 4

## FIG 5

## FIG 6

## FIG 7

Legend:
- – – – rotated BTT profile
- ······ dilated rotated profile
- ——— fitted IDT profile with hot-cold spots

## FIG 8

# FIG 9

(a)

Legend:
- o  BTT readings
- – – – – – BTT profile

(b)

Legend:
- o  IDT readings
- – – – – – fitted IDT profile
- ············ rotated BTT profile

FIG 10

# FIG 11

```
┌─────────────────────────┐
│      RECEIVE FIRST      │
│      TEMPERATURE        │      S0
│      MEASUREMENTS       │
└─────────────────────────┘
            │
            ▼
┌─────────────────────────┐
│     RECEIVE SECOND      │
│      TEMPERATURE        │      S1
│      MEASUREMENTS       │
└─────────────────────────┘
            │
            ▼
┌─────────────────────────┐
│  DETERMINE ASSOCIATION  │
│    BETWEEN FIRST AND    │      S2
│  SECOND PROBING POINTS  │
└─────────────────────────┘
```

**Europäisches Patentamt**
**European Patent Office**
**Office européen des brevets**

# EUROPEAN SEARCH REPORT

Application Number

EP 18 15 8970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 953 454 A1 (SIEMENS AG [DE]) 6 August 2008 (2008-08-06) * page 5, paragraph 28 - paragraph 31 * * page 6, paragraph 34 - page 7, paragraph 47 * * figure 1 * | 1,14,15 | INV. F23N5/10 F01D17/08 F02C9/28 F01D21/00 |
| A | US 2004/148940 A1 (VENKATESWARAN NARAYANAN [IN] ET AL) 5 August 2004 (2004-08-05) * page 3, paragraph 22 - paragraph 26 * * page 4, paragraph 30 * * figures 1-2B,4,8 * | 1,14,15 | |
| A | US 6 460 346 B1 (CLEARY MARK JAMES [US]) 8 October 2002 (2002-10-08) * column 3, line 59 - column 5, line 52 * * figures 1,2 * | 1,14,15 | |
| A | US 2005/097895 A1 (KOTHNUR VASANTH S [US] ET AL) 12 May 2005 (2005-05-12) * page 2, paragraph 23 - page 4, paragraph 36 * * figures 1-4 * | 1,14,15 | TECHNICAL FIELDS SEARCHED (IPC) |
| A | US 2013/014514 A1 (ROMIG BRYAN WESLEY [US] ET AL) 17 January 2013 (2013-01-17) * page 2, paragraph 19 - paragraph 23 * * page 3, paragraph 31 - page 4, paragraph 35 * * figure 1 * | 1,14,15 | F23N F01D F02C |

The present search report has been drawn up for all claims

| Place of search | Date of completion of the search | Examiner |
|---|---|---|
| Munich | 13 August 2018 | Gavriliu, Costin |

EPO FORM 1503 03.82 (P04C01)

**EP 3 531 019 A1**

## ANNEX TO THE EUROPEAN SEARCH REPORT
## ON EUROPEAN PATENT APPLICATION NO.

EP 18 15 8970

13-08-2018

| Patent document cited in search report | | | Publication date | Patent family member(s) | | | Publication date |
|---|---|---|---|---|---|---|---|
| EP 1953454 | A1 | | 06-08-2008 | CN | 101595344 | A | 02-12-2009 |
| | | | | EP | 1953454 | A1 | 06-08-2008 |
| | | | | EP | 2108093 | A1 | 14-10-2009 |
| | | | | RU | 2009132539 | A | 10-03-2011 |
| | | | | US | 2010024431 | A1 | 04-02-2010 |
| | | | | WO | 2008092822 | A1 | 07-08-2008 |
| US 2004148940 | A1 | | 05-08-2004 | CA | 2455280 | A1 | 30-07-2004 |
| | | | | CN | 1519554 | A | 11-08-2004 |
| | | | | EP | 1445450 | A1 | 11-08-2004 |
| | | | | IL | 172040 | A | 03-12-2007 |
| | | | | JP | 4467321 | B2 | 26-05-2010 |
| | | | | JP | 2004232643 | A | 19-08-2004 |
| | | | | KR | 20040070039 | A | 06-08-2004 |
| | | | | US | 2004148940 | A1 | 05-08-2004 |
| | | | | US | 2006201158 | A1 | 14-09-2006 |
| US 6460346 | B1 | | 08-10-2002 | US | 6460346 | B1 | 08-10-2002 |
| | | | | US | 2002183916 | A1 | 05-12-2002 |
| US 2005097895 | A1 | | 12-05-2005 | CN | 1878936 | A | 13-12-2006 |
| | | | | CN | 101344037 | A | 14-01-2009 |
| | | | | EP | 1689992 | A2 | 16-08-2006 |
| | | | | JP | 4652335 | B2 | 16-03-2011 |
| | | | | JP | 2007510859 | A | 26-04-2007 |
| | | | | US | 2005097895 | A1 | 12-05-2005 |
| | | | | US | 2007125088 | A1 | 07-06-2007 |
| | | | | WO | 2005047670 | A2 | 26-05-2005 |
| US 2013014514 | A1 | | 17-01-2013 | CN | 102877948 | A | 16-01-2013 |
| | | | | EP | 2546575 | A2 | 16-01-2013 |
| | | | | US | 2013014514 | A1 | 17-01-2013 |

EPO FORM P0459

For more details about this annex : see Official Journal of the European Patent Office, No. 12/82